# EUROPEAN PATENT APPLICATION

(11) **EP 4 145 615 A1**
(43) Date of publication of application: **08.03.2023**
(21) Application number: 22193290.8
(22) Date of filing: 31.08.2022
(51) Int. Cl.: H01M 50/466, H01M 50/46, H01M 50/204, H01M 10/04

(54) **BATTERY CELL AND BATTERY MODULE**

(30) Priority: 01.09.2021 JP 2021142466
(71) Applicant: Envision AESC Japan Ltd., Zama-shi, Kanagawa 252-0012 (JP)
(72) Inventor: HUANG, Kuoyang, Zama-shi, 252-0012 (JP)
(74) Representative: Hamer, Christopher K.

(57) **Abstract**

Any of a position of a fifth end surface (132aA) of a first folded portion (132A) at a first side portion (S1), a position of a first inner surface (132bA) of the first folded portion (132A) opposite to the fifth end surface (132aA) of the first folded portion (132A), and a position of a portion between the fifth end surface (132aA) and the first inner surface (132bA) of the first folded portion (132A) is aligned with a position of a third end surface (120a) of a second electrode (120) at the first side portion (S1).

## Description

This application is based on Japanese patent application NO. 2021-142466, filed on Sep. 1, 2021, the content of which is incorporated hereinto by reference.

### BACKGROUND

### TECHNICAL FIELD

The present invention relates to a battery cell and a battery module.

### RELATED ART

In recent years, a non-aqueous electrolyte battery cell such as a lithium ion secondary battery cell has been developed. The battery cell may include a plurality of first electrodes and a plurality of second electrodes arranged alternately, and a separator that separates the adjacent first and second electrodes from each other. The first electrode is, for example, a positive electrode. The second electrode is, for example, a negative electrode having an area larger than an area of the positive electrode. In some battery cells, the separator is folded alternately at a first side portion of the plurality of first electrodes and the plurality of second electrodes and a second side portion on a side opposite to the first side portion of the plurality of first electrodes and the plurality of second electrodes. Thus, the separator has a first folded portion that covers an end surface of the first electrode at the first side portion and a second folded portion that covers an end surface of the second electrode at the second side portion.

International Publication No. WO2019/064740 discloses an example of a battery cell. In this battery cell, a position of an inner surface on a side opposite to an end surface of a first folded portion of a separator at a first side portion is located outside the first side portion with respect to the center of a first electrode or a second electrode from a position of an end surface of the second electrode at the first side portion.

Japanese Unexamined Patent Publication No. 2002-329530 and Japanese Unexamined Patent Publication No. 2009-93812 disclose an example of a battery cell. In this battery cell, an end surface of a first folded portion of a separator at a first side portion is located inside the first side portion with respect to the center of a first electrode or a second electrode from an end surface of the second electrode at the first side portion.

### SUMMARY

It may be required to distinguish between the first side portion and the second side portion of the battery cell. For example, in a battery module including a plurality of battery cells, the first side portion or the second side portion may be directed to the same side in any of the plurality of battery cells. In this case, it is necessary to distinguish between the first side portion and the second side portion.

For example, as disclosed in International Publication No. WO2019/064740, the inner surface on the side opposite to the end surface of the first folded portion at the first side portion may be located outside the first side portion with respect to the center of the first electrode or the second electrode from the end surface of the second electrode at the first side portion. An inner surface on a side opposite to an end surface of the second folded portion at a second side portion may be located outside the second side portion with respect to the center of the first electrode or the second electrode from an end surface of the first electrode at the second side portion. However, in this case, from the first side portion, the end surface of the second electrode at the first side portion is hardly visible, and the end surface of the first folded portion at the first side portion is visible. From the second side portion, the end surface of the first electrode at the second side portion is hardly visible, and the end surface of the second folded portion at the second side portion is visible. The end surface of the first folded portion at the first side portion and the end surface of the second folded portion at the second side portion may have substantially the same color. In this case, it may be difficult to distinguish between the first side portion and the second side portion.

For example, as disclosed in Japanese Unexamined Patent Publication No. 2002-329530 and Japanese Unexamined Patent Publication No. 2009-93812, the end surface of the first folded portion at the first side portion may be located inside the first side portion with respect to the center of the first electrode or the second electrode from the end surface of the second electrode at the first side portion. However, in this case, an area of a region of the first electrode and the second electrode that overlap each other may be relatively small.

An example of the object of the present invention is to facilitate distinction between a first side portion of a battery cell in which an end surface of a first electrode is covered by a first folded portion of a separator and a second side portion of the battery cell in which an end surface of a second electrode is covered by a second folded portion of the separator, while increasing an area of a region of the first electrode and the second electrode that overlap each other. Other objects of the present invention will become apparent from the description herein.

An aspect of the present invention is a battery cell. The battery includes a first electrode, a second electrode having an area larger than an area of the first electrode, and a separator having a first folded portion that covers an end surface of the first electrode at a first side portion of the first electrode and the second electrode. Any of a position of an end surface of the first folded portion at the first side portion, a position of an inner surface of the first folded portion opposite to the end surface of the first folded portion, and a position of a portion between the end surface and the inner surface of the first folded portion is aligned with a position of an end surface of the second electrode at the first side portion.

Another aspect of the present invention is a battery module including a plurality of the battery cells.

According to the above aspect of the present invention, it is possible to increase an area of a region of the first electrode and the second electrode that overlap each other. In addition, it is possible to facilitate distinction between the first side portion of the battery cell in which the end surface of the first electrode is covered by the first folded portion of the separator and the second side portion of the battery cell in which the end surface of the second electrode is covered by the second folded portion of the separator.

### BRIEF DESCRIPTION OF THE DRAWINGS

The above and other objects, advantages and features of the present invention will be more apparent from the following description of certain preferred embodiments taken in conjunction with the accompanying drawings, in which:
Fig. 1 is a perspective view of a battery module according to Embodiment 1.
Fig. 2 is a perspective view of a plurality of battery cells housed in a housing member shown in Fig. 1.
Fig. 3 is a plan view of the battery cell shown in Fig. 2.
Fig. 4 is a cross-sectional view taken along the line A-A' of Fig. 3.
Fig. 5 is an enlarged view of a region α surrounded by a broken line in Fig. 4.
Fig. 6 is a diagram for describing an example of a method of manufacturing a battery cell according to Embodiment 1.
Fig. 7 is an enlarged view of a part of a cross section of a battery cell according to Embodiment 2.
Fig. 8 is an enlarged view of a part of a cross section of a battery cell according to Embodiment 3.
Fig. 9 is a cross-sectional view of a battery cell according to Embodiment 4.
Fig. 10 is a plan view of a battery cell according to Embodiment 5.

### DETAILED DESCRIPTION

The invention will be now described herein with reference to illustrative embodiments. Those skilled in the art will recognize that many alternative embodiments can be accomplished using the teachings of the present invention and that the invention is not limited to the embodiments illustrated for explanatory purposes.

Hereinafter, embodiments of the present invention will be described with reference to the drawings. In all drawings, the same components are denoted by the same reference numerals, and description thereof will not be repeated.

In the present specification, the ordinal numerals such as "first", "second", and "third" are used only for the purpose of distinguishing the configurations having the same names unless otherwise specified, and do not mean any specific feature (for example, order or importance) of the configuration.

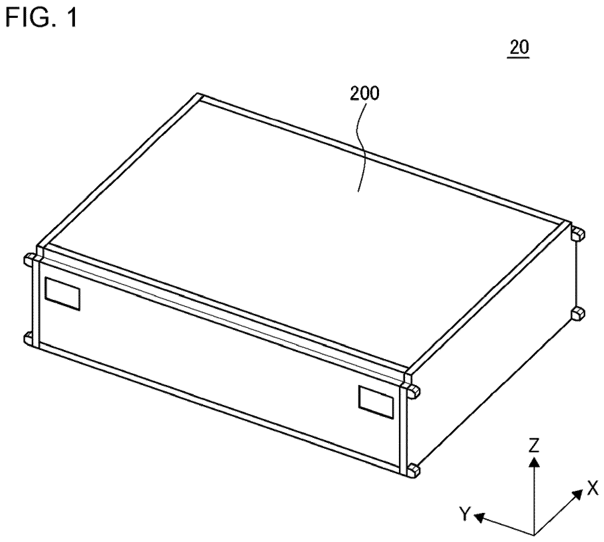

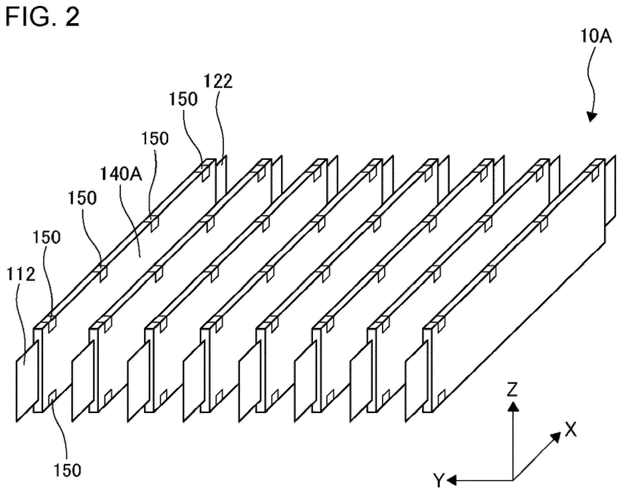

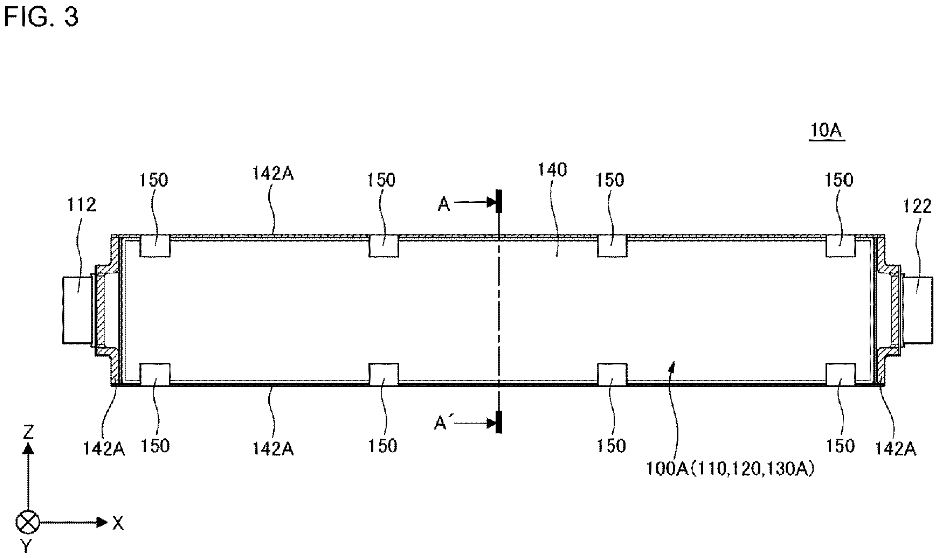

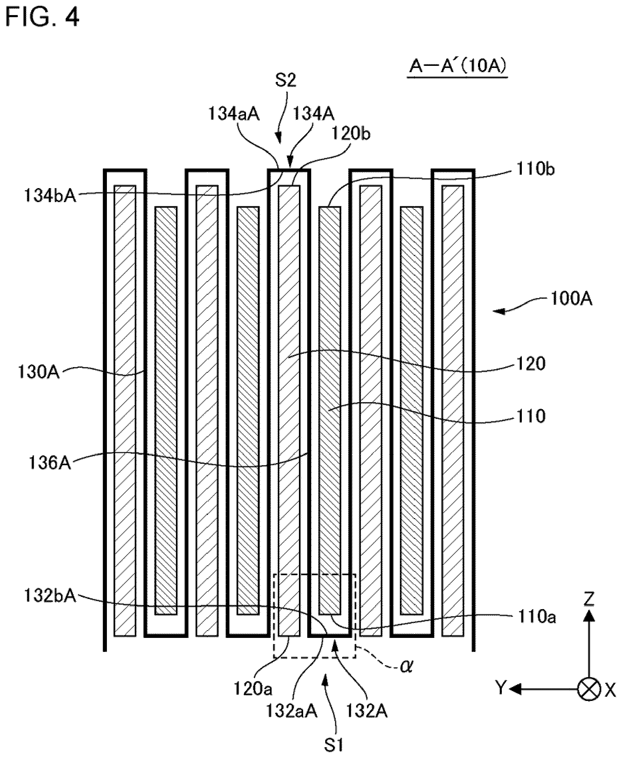

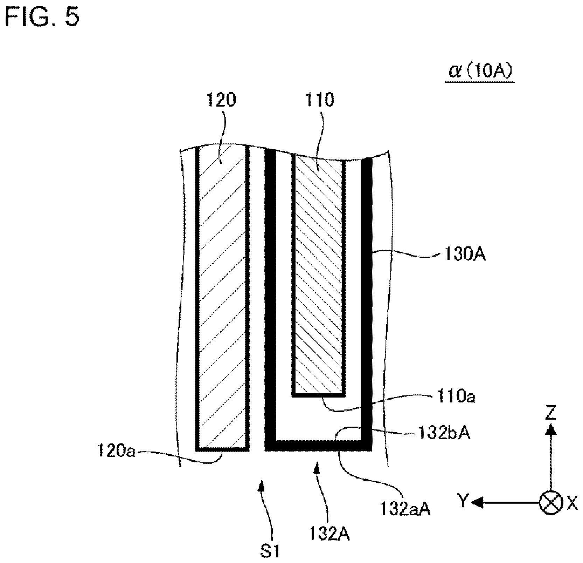

Fig. 1 is a perspective view of a battery module 20 according to Embodiment 1. Fig. 2 is a perspective view of a plurality of battery cells 10A housed in a housing member 200 shown in Fig. 1. Fig. 3 is a plan view of the battery cell 10A shown in Fig. 2. Fig. 4 is a cross-sectional view taken along the line A-A' of Fig. 3. Fig. 5 is an enlarged view of a region α surrounded by a broken line in Fig. 4.

In Figs. 1 to 5, arrows indicating a first direction X, a second direction Y, or a third direction Z indicates that a direction from a proximal end to a distal end of the arrow is a positive direction of the direction indicated by the arrow, and that a direction from the distal end to the proximal end of the arrow is a negative direction of the direction indicated by the arrow. In Figs. 3 to 5, a white circle with X indicating the first direction X or the second direction Y indicates that a direction from the front to the back of the paper is a positive direction of the direction indicated by the white circle, and that a direction from the back to the front of the paper is a negative direction of the direction indicated by the white circle.

In Figs. 1 to 4, the first direction X indicates one direction parallel to a horizontal direction perpendicular to a vertical direction. The second direction Y indicates a direction orthogonal to both the first direction X and the vertical direction. The third direction Z indicates a direction parallel to the vertical direction. The positive direction of the third direction Z is a direction from a lower side to an upper side in the vertical direction. The negative direction of the third direction Z is a direction from the upper side to the lower side in the vertical direction.

In the present embodiment, the battery cell 10A has a longitudinal direction parallel to the first direction X. In the example shown in Fig. 3, the positive direction of the first direction X is a direction from a first lead 112 to a second lead 122, which will be described below. The negative direction of the first direction X is a direction from the second lead 122 to the first lead 112. The battery cell 10A has a lateral direction parallel to the third direction Z. The battery cell 10A has a thickness parallel to the second direction Y. The relationship between the longitudinal direction, the lateral direction, and the thickness of the battery cell 10A and the first direction X, the second direction Y, and the third direction Z is not limited to a relationship according to the present embodiment.

The battery module 20 will be described with reference to Figs. 1 and 2.

The battery module 20 includes a plurality of the battery cells 10A and a housing member 200. The plurality of battery cells 10A are housed in the housing member 200. The plurality of battery cells 10A are arranged in the second direction Y. The housing member 200 is, for example, a housing made of metal or resin.

As shown in Fig. 2, each battery cell 10A has a first lead 112, a second lead 122, an exterior member 140A, and a plurality of fixing members 150.

The first lead 112 is electrically connected to a first electrode 110, which will be described below. The second lead 122 is electrically connected to a second electrode 120, which will be described below. The first lead 112 and the second lead 122 are provided on both sides of the battery cell 10A in the first direction X. In another example different from the present embodiment, both the first lead 112 and the second lead 122 may be provided at an end portion of the battery cell 10A on the positive direction side or the negative direction side of the first direction X.

The exterior member 140A wraps a stack 100A, which will be described below, together with an electrolyte. The electrolyte is, for example, an electrolytic solution, a solid electrolyte, or a gel electrolyte. The exterior member 140A has a portion that covers the stack 100A from the positive direction side of the second direction Y and a portion that covers the stack 100A from the negative direction side of the second direction Y. These portions of the exterior member 140A are pasted to each other to form a sealing portion 142A. In Embodiment 1, the sealing portion 142A is formed along two sides on the positive direction side and the negative direction side of the first direction X and two sides on the positive direction side and the negative direction side of the third direction Z of the stack 100A.

The fixing member 150 is, for example, an insulating tape. In Embodiment 1, four fixing members 150 are provided on a side extending in the first direction X on the negative direction side of the third direction Z of the exterior member 140A. In addition, four fixing members 150 are provided on a side extending in the first direction X on the positive direction side of the third direction Z of the exterior member 140A. The arrangement of the fixing member 150 is not limited to an arrangement according to Embodiment 1.

The battery cell 10A will be described with reference to Figs. 4 and 5. In Embodiment 1, the battery cell 10A is a lithium ion secondary battery.

The battery cell 10A has a stack 100A. The stack 100A includes a plurality of first electrodes 110, a plurality of second electrodes 120, and a separator 130A.

In Embodiment 1, the first electrode 110 is a positive electrode. The second electrode 120 is a negative electrode. The second electrode 120 has an area larger than an area of the first electrode 110. In another example different from Embodiment 1, the first electrode 110 may be a negative electrode. The second electrode 120 may be a positive electrode. Each first electrode 110 and each second electrode 120 has a thickness in the second direction Y. The area of the first electrode 110 or the second electrode 120 is an area when the first electrode 110 or the second electrode 120 is viewed from the positive direction or the negative direction of the second direction Y.

As shown in Fig. 4, the plurality of first electrodes 110 and the plurality of second electrodes 120 are alternately arranged in the second direction Y.

The plurality of first electrodes 110 and the plurality of second electrodes 120 have a first side portion S1 and a second side portion S2. In Embodiment 1, the first side portion S1 is a portion of the plurality of first electrodes 110 and the plurality of second electrodes 120 located on a lower side with respect to the center in the third direction Z of the plurality of first electrodes 110 and the plurality of second electrodes 120. The second side portion S2 is located on a side opposite to the first side portion S1. In Embodiment 1, the second side portion S2 is a portion of the plurality of first electrodes 110 and the plurality of second electrodes 120 located on an upper side with respect to the center in the third direction Z of the plurality of first electrodes 110 and the plurality of second electrodes 120.

In Embodiment 1, a position of the center of the first electrode 110 in the third direction Z and a position of the center of the second electrode 120 in the third direction Z are aligned in the third direction Z. That is, in a shadow of the first electrode 110 and the second electrode 120 projected in the second direction Y onto a virtual plane perpendicular to the second direction Y, the center of the first electrode 110 in the third direction Z and the center of the second electrode 120 in the third direction Z overlap each other.

The first electrode 110 has a first end surface 110a and a second end surface 110b. The first end surface 110a is an end surface of the first electrode 110 at the first side portion S1. The second end surface 110b is an end surface of the first electrode 110 at the second side portion S2.

The second electrode 120 has a third end surface 120a and a fourth end surface 120b. The third end surface 120a is an end surface of the second electrode 120 at the first side portion S1. The fourth end surface 120b is an end surface of the second electrode 120 at the second side portion S2.

A position of the third end surface 120a in the third direction Z is located outside the first side portion S1 with respect to the center of the first electrode 110 or the second electrode 120 in the third direction Z from a position of the first end surface 110a in the third direction Z. That is, in a shadow of the first electrode 110 and the second electrode 120 projected in parallel with the second direction Y onto a virtual plane perpendicular to the second direction Y, the third end surface 120a is located on the negative direction side of the third direction Z with respect to the first end surface 110a.

A position of the fourth end surface 120b in the third direction Z is located outside the second side portion S2 with respect to the center of the first electrode 110 or the second electrode 120 in the third direction Z from a position of the second end surface 110b in the third direction Z. That is, in the shadow of the first electrode 110 and the second electrode 120 projected in parallel with the second direction Y onto the virtual plane perpendicular to the second direction Y, the fourth end surface 120b is located on the positive direction side of the third direction Z with respect to the second end surface 110b.

The separator 130A has a plurality of first folded portions 132A, a plurality of second folded portions 134A, and a plurality of extending portions 136A.

Each of the plurality of first folded portions 132A covers each of the plurality of first end surfaces 110a. Each of the plurality of second folded portions 134A covers each of the plurality of fourth end surfaces 120b. Each of the plurality of extending portions 136A passes through a region between the first electrode 110 and the second electrode 120 adjacent to each other in the second direction Y. An end portion of each extending portion 136A at the first side portion S1 is continuous with the first folded portion 132A. An end portion of each extending portion 136A at the second side portion S2 is continuous with the second folded portion 134A. In this way, the separator 130A is alternately folded at the first side portion S1 and the second side portion S2.

The first folded portion 132A has a fifth end surface 132aA and a first inner surface 132bA. The fifth end surface 132aA is an end surface of the first folded portion 132A at the first side portion S1. Specifically, in Embodiment 1, the fifth end surface 132aA is a lower surface of a portion of the first folded portion 132A that extends in the second direction Y below the first electrode 110. The first inner surface 132bA is located opposite to the fifth end surface 132aA in the third direction Z. Specifically, in Embodiment 1, the first inner surface 132bA is an upper surface of a portion of the first folded portion 132A that extends in the second direction Y below the first electrode 110.

The second folded portion 134A has a sixth end surface 134aA and a second inner surface 134bA. The sixth end surface 134aA is an end surface of the second folded portion 134A at the second side portion S2. Specifically, in Embodiment 1, the sixth end surface 134aA is an upper surface of a portion of the second folded portion 134A that extends in the second direction Y above the second electrode 120. The second inner surface 134bA is located opposite to the sixth end surface 134aA in the third direction Z. Specifically, in Embodiment 1, the second inner surface 134bA is a lower surface of a portion of the second folded portion 134A that extends in the second direction Y above the second electrode 120.

As shown in Fig. 5, a position of the fifth end surface 132aA in the third direction Z is aligned in the third direction Z with the position of the third end surface 120a in the third direction Z. That is, in a shadow of the second electrode 120 and the first folded portion 132A projected in parallel with the second direction Y onto a virtual plane perpendicular to the second direction Y, the fifth end surface 132aA overlaps the third end surface 120a.

As shown in Fig. 4, a position of the second inner surface 134bA in the third direction Z is located outside the second side portion S2 with respect to the center of the first electrode 110 or the second electrode 120 in the third direction Z from the position of the second end surface 110b in the third direction Z. That is, in a shadow of the first electrode 110 and the second folded portion 134A projected in parallel with the second direction Y onto a virtual plane perpendicular to the second direction Y, the second inner surface 134bA is located on the positive direction side of the third direction Z with respect to the second end surface 110b.

The structure of the separator 130A is not limited to a structure according to Embodiment 1. For example, the position of the second inner surface 134bA in the third direction Z may be aligned in the third direction Z with the position of the second end surface 110b in the third direction Z. Alternatively, the position of the second inner surface 134bA in the third direction Z may be located inside the second side portion S2 with respect to the center of the first electrode 110 or the second electrode 120 in the third direction Z from the position of the second end surface 110b in the third direction Z.

A comparison is made between Embodiment 1 and Comparative Example 1 in which the position of the first inner surface 132bA in the third direction Z is located outside the first side portion S1 with respect to the center of the first electrode 110 or the second electrode 120 in the third direction Z from the position of the third end surface 120a in the third direction Z. That is, in Comparative Example 1, in a shadow of the second electrode 120 and the first folded portion 132A projected in parallel with the second direction Y onto a virtual plane perpendicular to the second direction Y, the first inner surface 132bA is located on the negative direction side of the third direction Z with respect to the third end surface 120a.

In Embodiment 1, the third end surface 120a is more easily exposed from the first folded portion 132A as compared with Comparative Example 1. Accordingly, in Embodiment 1, the third end surface 120a is more easily visible from the first side portion S1 as compared with Comparative Example 1. On the other hand, in Comparative Example 1, from the first side portion S1, the third end surface 120a is hardly visible, and the fifth end surface 132aA is visible. In both Embodiment 1 and Comparative Example 1, from the second side portion S2, the second end surface 110b is hardly visible, and the sixth end surface 134aA is visible. The fifth end surface 132aA and the sixth end surface 134aA may have substantially the same color. In this case, in Comparative Example 1, it may be difficult to distinguish between the first folded portion 132A and the second folded portion 134A. Meanwhile, the third end surface 120a and the sixth end surface 134aA may have different colors. In this case, in Embodiment 1, it is possible to facilitate distinction between the first folded portion 132A and the second folded portion 134A as compared with Comparative Example 1.

A comparison is made between Embodiment 1 and Comparative Example 2 in which the position of the fifth end surface 132aA in the third direction Z is located inside the first side portion S1 with respect to the center of the first electrode 110 or the second electrode 120 in the third direction Z from the position of the third end surface 120a in the third direction Z. That is, in Comparative Example 2, in a shadow of the second electrode 120 and the first folded portion 132A projected in parallel with the second direction Y onto a virtual plane perpendicular to the second direction Y, the fifth end surface 132aA is located on the positive direction side of the third direction Z with respect to the third end surface 120a.

In Embodiment 1, as compared with Comparative Example 2, a position in the third direction Z of a portion of the first folded portion 132A between the fifth end surface 132aA and the first inner surface 132bA can be located outside the first side portion S1 with respect to the center of the first electrode 110 or the second electrode 120 in the third direction Z from the position of the third end surface 120a in the third direction Z. Accordingly, in Embodiment 1, the area of the first electrode 110 can be increased as compared with Comparative Example 2. Thus, in Embodiment 1, an area of a region of the first electrode 110 and the second electrode 120 that overlap each other in the second direction Y can be increased as compared with Comparative Example 2.

A distance in the third direction Z between the first end surface 110a and the first inner surface 132bA may be, for example, zero, or may be greater than zero and not more than 25 times, 20 times, 15 times, 10 times, or 5 times a thickness of the first electrode 110 in the second direction Y. In a case where the distance is equal to or less than the upper limit of the range, a capacity of the battery cell 10A can be increased as compared with a case where the distance is larger than the upper limit of the range.

A distance in the third direction Z between the fourth end surface 120b and the second inner surface 134bA may be, for example, zero, or may be greater than zero and not more than 25 times, 20 times, 15 times, 10 times, or 5 times a thickness of the second electrode 120 in the second direction Y. In a case where the distance is equal to or less than the upper limit of the range, a capacity of the battery cell 10A can be increased as compared with a case where the distance is larger than the upper limit of the range.

Next, a usage method of the battery cell 10A will be described.

In Embodiment 1, the first side portion S1 is directed downward in the vertical direction. The second side portion S2 is directed upward in the vertical direction. In Embodiment 1, as compared with a case where the first side portion S1 and the second side portion S2 are directed in the horizontal direction, gas generated from the first electrode 110 or the second electrode 120 and rising in the electrolyte by buoyancy could be unlikely to stay between the first electrode 110 and the second electrode 120.

The gas generated from the first electrode 110 or the second electrode 120 is generated by the use of the battery cell 10A such as charging. In a case where the gas stays between the first electrode 110 and the second electrode 120, the reaction of the battery cell 10A between the first electrode 110 and the second electrode 120 may be hindered. Thus, the capacity of the battery cell 10A can be reduced. In addition, contaminants such as metals may be pushed up by the gas and deposited on a surface of the first electrode 110 or the second electrode 120. Accordingly, it is desirable that the gas does not stay between the first electrode 110 and the second electrode 120.

In Embodiment 1, both sides of the second folded portion 134A in the second direction Y are not covered by an upper end portion of the first electrode 110. On the other hand, both sides of the first folded portion 132A in the second direction Y are covered by a lower end portion of the second electrode 120. Accordingly, the gas generated from the first electrode 110 or the second electrode 120 could be unlikely to stay between the first electrode 110 and the second electrode 120 in a case where the gas generated from the second electrode 120 passes through the second folded portion 134A with the second side portion S2 directed upward, rather than in a case where the gas generated from the first electrode 110 passes through the first folded portion 132A with the first side portion S1 directed upward.

The usage method of the battery cell 10A is not limited to a method according to the present embodiment. For example, the first side portion S1 may be directed upward in the vertical direction. The second side portion S2 may be directed downward in the vertical direction. Also in this example, as compared with a case where the first side portion S1 and the second side portion S2 are directed in the horizontal direction, the gas generated from the first electrode 110 or the second electrode 120 and rising in the electrolyte by buoyancy could be unlikely to stay between the first electrode 110 and the second electrode 120. Alternatively, the battery cell 10A may be used with the first side portion S1 and the second side portion S2 directed in the horizontal direction.

In the battery module 20, the first side portion S1 or the second side portion S2 may be directed to the same side in any of the plurality of battery cells 10A. In one example, in any of the plurality of battery cells 10A, the first side portion S1 may be directed downward. In addition, in any of the plurality of battery cells 10A, the second side portion S2 may be directed upward. In this example, as compared with a case where the orientation of the first side portion S1 or the second side portion S2 in some battery cells 10A is different from the orientation of the first side portion S1 or the second side portion S2 in some other battery cells 10A, the gas generated from the first electrode 110 or the second electrode 120 could be unlikely to stay between the first electrode 110 and the second electrode 120 in all of the plurality of battery cells 10A.

In order to direct the first side portion S1 or the second side portion S2 to the same side in any of the plurality of battery cells 10A, it is necessary to distinguish between the first side portion S1 and the second side portion S2. As described above, in Embodiment 1, the first side portion S1 and the second side portion S2 can be easily distinguished from each other as compared with Comparative Example 1. Accordingly, in Embodiment 1, as compared with Comparative Example 1, it is easy to direct the first side portion S1 or the second side portion S2 to the same side in any of the plurality of battery cells 10A.

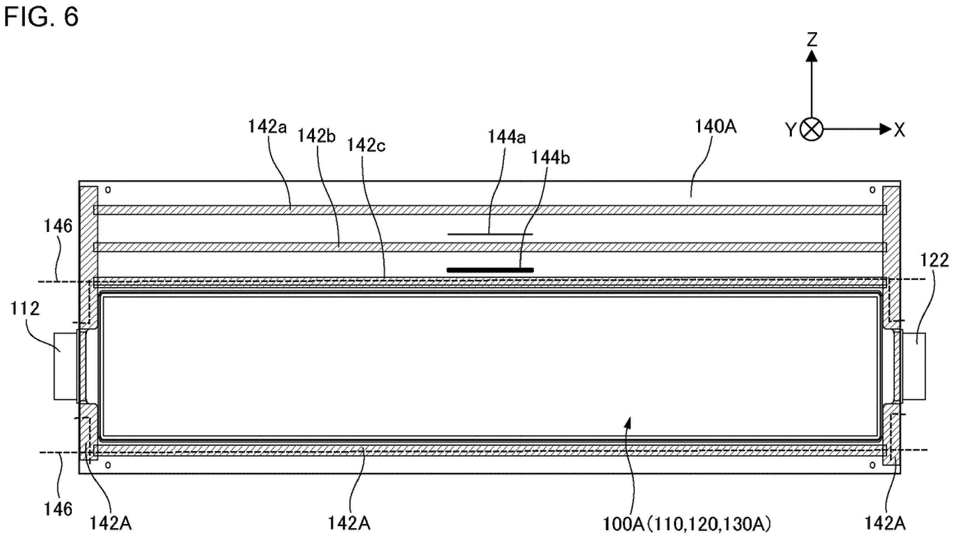

Fig. 6 is a diagram for describing an example of a method of manufacturing the battery cell 10A according to Embodiment 1. An example of the method of manufacturing the battery cell 10A will be described with reference to Fig. 6.

First, the stack 100A is wrapped with the exterior member 140A.

Specifically, the exterior member 140A has a portion that covers the stack 100A from the positive direction side of the second direction Y and a portion that covers the stack 100A from the negative direction side of the second direction Y. These portions of the exterior member 140A are pasted to each other to form the sealing portion 142A. The sealing portion 142A is formed along two sides on the positive direction side and the negative direction side of the first direction X and one side on the negative direction side of the third direction Z. In the example shown in Fig. 6, the exterior member 140A has a portion drawn out from one side of the stack 100A on the positive direction side of the third direction Z to the positive direction side of the third direction Z. A portion of the sealing portion 142A formed along two sides on the positive direction side and the negative direction side of the first direction X is also formed in the portion of the exterior member 140A drawn out from one side of the stack 100A on the positive direction side of the third direction Z to the positive direction side of the third direction Z.

Next, an electrolyte is injected into the exterior member 140A. Next, a first sealing portion 142a is formed on a portion of the exterior member 140A spaced apart from one side of the stack 100A on the positive direction side of the third direction Z by pasting such as welding. Thus, the stack 100A is sealed by the exterior member 140A.

Next, gas inside the exterior member 140A is discharged with the second side portion S2 directed upward.

Specifically, first, gas generated inside the exterior member 140A is discharged through a first hole 144a by performing initial charging. The first hole 144a is formed nearer the stack 100A in the third direction Z than first sealing portion 142a is. The first hole 144a is formed after the first sealing portion 142a is formed. Specifically, the first hole 144a is formed at a timing to discharge gas, such as after gas is generated by the initial charging. However, the timing when the first hole 144a is formed is not limited to this example.

Next, a second sealing portion 142b is formed, by pasting such as welding, nearer the stack 100A in the third direction Z than the first hole 144a of the exterior member 140A is. Next, gas generated inside the exterior member 140A by aging is discharged through a second hole 144b. The second hole 144b is formed nearer the stack 100A in the third direction Z than the second sealing portion 142b is. The second hole 144b is formed after the second sealing portion 142b is formed. Specifically, the second hole 144b is formed at a timing to discharge gas, such as after gas is generated by the aging. However, the timing when the second hole 144b is formed is not limited to this example.

Next, a third sealing portion 142c is formed by pasting such as welding along one side of the stack 100A on the positive direction side of the third direction Z. Next, the exterior member 140A is cut along two cutting lines 146 extending in the first direction X on both sides of the stack 100A in the third direction Z. Thus, the battery cell 10A is manufactured.

When gas inside the exterior member 140A is discharged through the first hole 144a or the second hole 144b, the second side portion S2 can be directed upward. Thus, gas generated from the second electrode 120 by the initial charging or aging can be easily discharged from the second folded portion 134A.

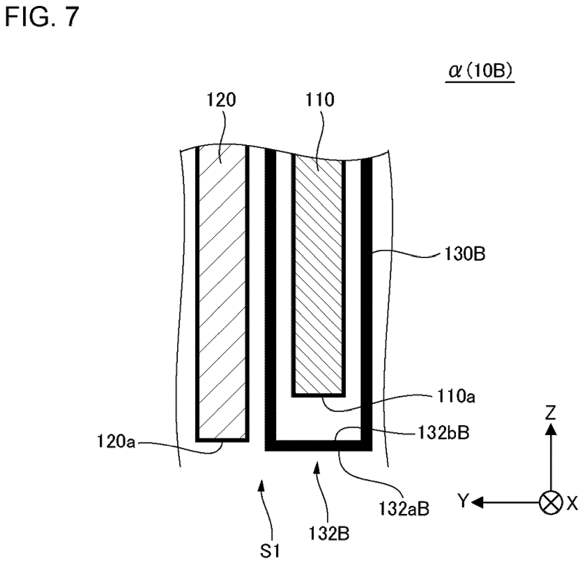

Fig. 7 is an enlarged view of a part of a cross section of a battery cell 10B according to Embodiment 2. The battery cell 10B according to Embodiment 2 is the same as the battery cell 10A according to Embodiment 1 except for the following points.

A first folded portion 132B of a separator 130B according to Embodiment 2 has a fifth end surface 132aB and a first inner surface 132bB in the same manner as the first folded portion 132A of the separator 130A according to Embodiment 1. In Embodiment 2, a position of the first inner surface 132bB in the third direction Z is aligned in the third direction Z with the position of the third end surface 120a in the third direction Z. That is, in a shadow of the second electrode 120 and the first folded portion 132B projected in parallel with the second direction Y onto a virtual plane perpendicular to the second direction Y, the first inner surface 132bB overlaps the third end surface 120a.

In Embodiment 2, as in Embodiment 1, the distinction between the first side portion S1 and the second side portion S2 can be facilitated as compared with Comparative Example 1. In addition, in Embodiment 2, as in Embodiment 1, an area of a region of the first electrode 110 and the second electrode 120 that overlap each other in the second direction Y can be increased as compared with Comparative Example 2.

A comparison is made between Embodiment 1 and Embodiment 2.

In Embodiment 1, as compared with Embodiment 2, a position of the third end surface 120a in the third direction Z can be located outside the first side portion S1 with respect to the center of the first electrode 110 or the second electrode 120 in the third direction Z from the position of the first inner surface 132bA in the third direction Z. Accordingly, in Embodiment 1, the third end surface 120a can be easily exposed from the first folded portion 132A as compared with Embodiment 2.

In Embodiment 2, as compared with Embodiment 1, a position in the third direction Z of a portion of the first folded portion 132B between the fifth end surface 132aB and the first inner surface 132bB can be located outside the first side portion S1 with respect to the center of the first electrode 110 or the second electrode 120 in the third direction Z from the position of the third end surface 120a in the third direction Z. Accordingly, in Embodiment 2, the area of the first electrode 110 can be increased as compared with Embodiment 1.

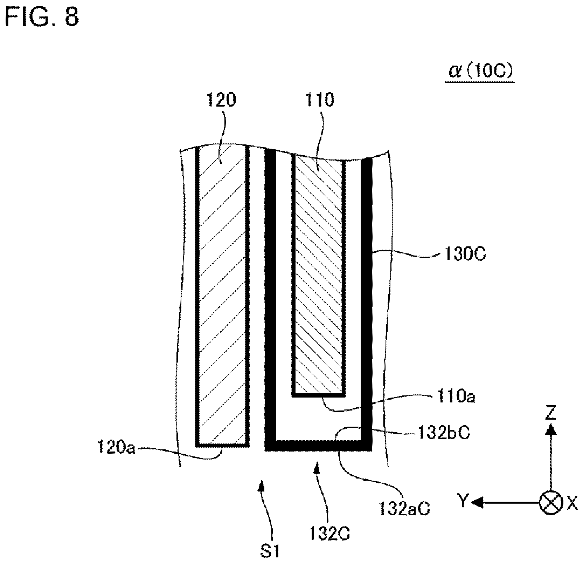

Fig. 8 is an enlarged view of a part of a cross section of a battery cell 10C according to Embodiment 3. The battery cell 10C according to Embodiment 3 is the same as the battery cell 10A according to Embodiment 1 except for the following points.

A first folded portion 132C of a separator 130C according to Embodiment 3 has a fifth end surface 132aC and a first inner surface 132bC in the same manner as the first folded portion 132A of the separator 130A according to Embodiment 1. In Embodiment 3, a position in the third direction Z of a portion of the first folded portion 132C between the fifth end surface 132aC and the first inner surface 132bC is aligned in the third direction Z with the position of the third end surface 120a in the third direction Z. That is, in a shadow of the second electrode 120 and the first folded portion 132C projected in parallel with the second direction Y onto a virtual plane perpendicular to the second direction Y, the portion of the first folded portion 132C between the fifth end surface 132aC and the first inner surface 132bC overlaps the third end surface 120a.

In Embodiment 3, as in Embodiment 1, the distinction between the first side portion S1 and the second side portion S2 can be facilitated as compared with Comparative Example 1. In addition, in Embodiment 3, as in Embodiment 1, an area of a region of the first electrode 110 and the second electrode 120 that overlap each other in the second direction Y can be increased as compared with Comparative Example 2.

In Embodiment 3, as compared with Embodiment 1, the position in the third direction Z of the portion of the first folded portion 132C between the fifth end surface 132aC and the first inner surface 132bC can be located outside the first side portion S1 with respect to the center of the first electrode 110 or the second electrode 120 in the third direction Z from the position of the third end surface 120a in the third direction Z. Accordingly, in Embodiment 3, the area of the first electrode 110 can be increased as compared with Embodiment 1.

In Embodiment 3, as compared with Embodiment 2, a position of the third end surface 120a in the third direction Z can be located outside the first side portion S1 with respect to the center of the first electrode 110 or the second electrode 120 in the third direction Z from the position of the first inner surface 132bC in the third direction Z. Accordingly, in Embodiment 3, the third end surface 120a can be easily exposed from the first folded portion 132C as compared with Embodiment 2.

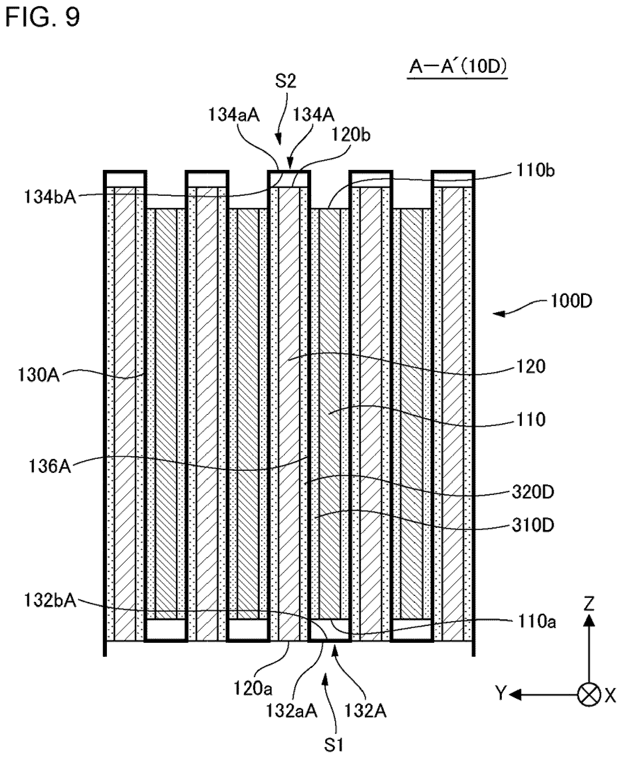

Fig. 9 is a cross-sectional view of a battery cell 10D according to Embodiment 4. The battery cell 10D according to Embodiment 4 is the same as the battery cell 10A according to Embodiment 1 except for the following points.

A stack 100D includes a first adhesion layer 310D and a second adhesion layer 320D.

The first adhesion layer 310D is at least partially located between the first electrode 110 and the extending portion 136A adjacent to each other in the second direction Y. Thus, a surface of the first electrode 110 facing the extending portion 136A and a surface of the extending portion 136A facing the first electrode 110 are adhered to each other through the first adhesion layer 310D. In this case, as compared with a case where the first adhesion layer 310D is not provided, the position of the fifth end surface 132aA in the third direction Z can be easily aligned exactly in the third direction Z with the position of the third end surface 120a in the third direction Z.

The second adhesion layer 320D is at least partially located between the second electrode 120 and the extending portion 136A adjacent to each other in the second direction Y. Thus, a surface of the second electrode 120 facing the extending portion 136A and a surface of the extending portion 136A facing the second electrode 120 are adhered to each other through the second adhesion layer 320D. In this case, as compared with a case where the second adhesion layer 320D is not provided, the position of the fifth end surface 132aA in the third direction Z can be easily aligned exactly in the third direction Z with the position of the third end surface 120a in the third direction Z.

In Embodiment 4, the battery cell 10D includes both the first adhesion layer 310D and the second adhesion layer 320D. However, in another example different from Embodiment 4, the battery cell 10D may include only one of the first adhesion layer 310D and the second adhesion layer 320D.

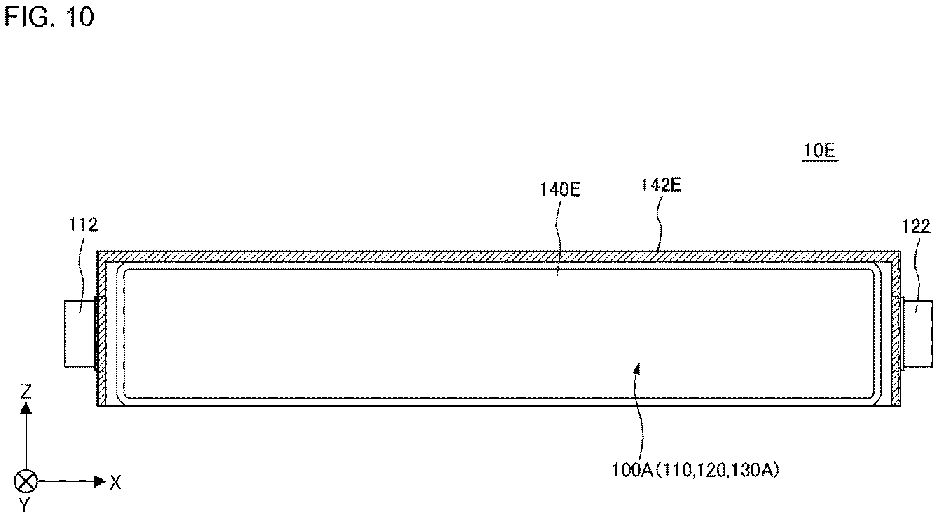

Fig. 10 is a plan view of a battery cell 10E according to Embodiment 5. The battery cell 10E according to Embodiment 5 is the same as the battery cell 10A according to Embodiment 1 except for the following points.

An exterior member 140E according to Embodiment 5 is folded on the negative direction side of the third direction Z of the stack 100A. Portions of the exterior member 140E that covers the stack 100A from both the positive direction and the negative direction of the second direction Y are pasted to each other by welding or the like to form a sealing portion 142E. The sealing portion 142E is formed along one side on the positive direction side of the third direction Z and two sides on the positive direction side and the negative direction side of the first direction X of the stack 100A. Also in Embodiment 5, as in Embodiment 1, gas generated from the first electrode 110 or the second electrode 120 could be unlikely to stay between the first electrode 110 and the second electrode 120.

Also in a method of manufacturing the battery cell 10E according to Embodiment 5, the second side portion S2 is directed upward in the same manner as in the example described with reference to Fig. 6, so that gas inside the exterior member 140E can be discharged. In this case, a roll press may be performed on the battery cell 10E after discharging the gas. The roll press allows the gas to be expelled into an extra space around the stack 100A. The gas may be further discharged through the holes formed in the exterior member 140E.

Although the embodiments of the present invention have been described above with reference to the drawings, these are examples of the present invention, and various configurations other than those described above can be adopted.

It is apparent that the present invention is not limited to the above embodiment, and may be modified and changed without departing from the scope and spirit of the invention.

## Claims

1. A battery cell (10A, 10B, 10C, 10D, 10E) comprising:
a first electrode (110);
a second electrode (120) having an area larger than an area of the first electrode (110); and
a separator (130A, 130B, 130C) having a first folded portion (132A, 132B, 132C) that covers an end surface (110a) of the first electrode (110) at a first side portion (S1) of the first electrode (110) and the second electrode (120),
wherein any of a position of an end surface (132aA, 132aB, 132aC) of the first folded portion (132A, 132B, 132C) at the first side portion (S1), a position of an inner surface (132bA, 132bB, 132bC) of the first folded portion (132A, 132B, 132C) opposite to the end surface (132aA, 132aB, 132aC) of the first folded portion (132A, 132B, 132C), and a position of a portion between the end surface (132aA, 132aB, 132aC) and the inner surface (132bA, 132bB, 132bC) of the first folded portion (132A, 132B, 132C) is aligned with a position of an end surface (120a) of the second electrode (120) at the first side portion (S1).

2. The battery cell (10A, 10B, 10C, 10D, 10E) according to claim 1,
wherein the separator (130A, 130B, 130C) has a second folded portion (134A) that covers an end surface (120b) of the second electrode (120) at a second side portion (S2) opposite to the first side portion (S1) of the first electrode (110) and the second electrode (120).

3. The battery cell (10A, 10B, 10C, 10D, 10E) according to claim 1 or 2, further comprising:
at least one of a first adhesion (310D) at least partially located between the first electrode (110) and the separator (130A) and a second adhesion layer (320D) at least partially located between the second electrode (120) and the separator (130A).

4. The battery cell (10A, 10B, 10C, 10D, 10E) according to any one of claims 1 to 3,
wherein the first side portion (S1) is directed downward in a vertical direction.

5. The battery cell (10A, 10B, 10C, 10D, 10E) according to any one of claims 1 to 3,
wherein the first side portion (S1) is directed upward in a vertical direction.

6. A battery module (20) comprising:
a plurality of the battery cells (10A, 10B, 10C, 10D, 10E) according to any one of claims 1 to 5.

7. The battery module (20) according to claim 6,
wherein the first side portion (S1) is directed to the same side in any of the plurality of battery cells (10A, 10B, 10C, 10D, 10E).
